# EUROPÄISCHE PATENTANMELDUNG

(11) **EP 1 916 095 A2**
(43) Veröffentlichungstag der Anmeldung: **30.04.2008**
(21) Anmeldenummer: 07020734.5
(22) Anmeldetag: 23.10.2007
(51) Int. Cl.: B30B 15/12, B30B 15/10

(54) **Druckmittelbetätigte Schaltung**

(30) Priorität: 23.10.2006 DE 102006050300
(71) Anmelder: Ortlinghaus-Werke GmbH, 42929 Wermelskirchen (DE)
(72) Erfinder: Seeger, Herbert, 32547 Bad Oeynhausen (DE); Kuttruf, Werner, 42329 Wuppertal (DE)
(74) Vertreter: Füssel, Michael

(57) **Zusammenfassung**

Die vorliegende Erfindung betrifft eine druckmittelbetätigte Schaltung zur Verlagerung einer Kupplung in die Einrückstellung mittels einer Kolben-Zylinder-Einheit, die über ein Pressensicherheitsventil zwecks Halten der Kupplung in der Einrückstellung mit der Druckleitung kommunizierend verbindbar ist. Es ist die Aufgabe der Erfindung, die zur Betätigung der Kupplung druckmittelbetätigte Schaltung so zu verbessern, dass der Einrückvorgang an der Kupplung weich verläuft. Die Aufgabe wird dadurch gelöst, dass ein wegeventil vorgesehen ist, welches parallel zum Pressensicherheitsventil die Kolben-Zylinder-Einheit mit der Pumpe in der Weise verbindet, dass der Zufluss von Druckmittel mit zunehmender Annäherung an die Einrückstellung der Kupplung abnimmt.

## Beschreibung

Die vorliegende Erfindung betrifft eine druckmittelbetätigte Schaltung nach Oberbegriff des Hauptanspruchs.

Ohne Beschränkung der Erfindung hierauf dienen derartige druckmittelbetätigte Schaltungen zur Verlagerung der Kupplung einer Kupplungs-Brems-Kombination mit Sicherheitsbremse, die im Hauptantrieb einer mechanischen Presse sitzt.

Es soll jedoch ausdrücklich drauf hingewiesen werden, dass dies keine Beschränkung der Erfindung auf diesen Anwendungsfall ist.

Die Erfindung kann daher insbesondere auch bei Kupplungen Verwendung finden, die zu anderen zwecken dienen.

Stand der Technik zur Betätigung derartiger Kupplungen ist die Ansteuerung der Kolben-Zylinder-Einheit über ein Pressensicherheitsventil, welches die Kupplung in der Einrücksstellung hält. Hierbei handelt es sich um ein Ventil, welches entweder offen oder gesperrt ist.

Zu diesem Zweck wird die Kupplung über das Pressensicherheitsventil mit der Druckleitung kommunizierend verbunden gehalten.

Um die Kupplung zu lösen wird die Kolben-Zylinder-Einheit drucklos geschaltet.

Das grundsätzliche Problem derartiger Schaltungen besteht darin, weich einzukuppeln, d.h. hohe Beschleunigungen im Antriebsstrang zu vermeiden.

Insbesondere im Bereich der Beschleunigung von tonnenschweren Massen, wie sie bei mechanischen Pressen vorliegen, muß man versuchen, die Kupplung weich einzurücken.

Es ist daher Aufgabe der vorliegenden Erfindung, die zur Betätigung der Kupplung druckmittelbetätigte Schaltung so zu verbessern, dass der Einrückvorgang an der Kupplung weich verläuft.

Diese Aufgabe löst die Erfindung mit den Merkmalen des Hauptanspruchs.

Wesentlich ist hierbei das Wegeventil, welches paralell zum Pressensicherheitsventil mit der Kolben-Zylinder-Einheit verbunden ist.

Über das Wegeventil läßt sich der Zufluss des Druckmittels so steuern, dass mit zunehmender Annäherung an die Einrückstellung der Kupplung der Zufluss des Druckmittels abnimmt.

Auf diese Weise wird die Einrückstellung der Kupplung so erreicht, dass der Kupplungsvorgang weich verläuft.

Die zu vermeidenden hohen Beschleunigungen treten dank der Erfindung nicht auf.

Insbesondere der abnehmende Druckmittelstrom mit zunehmender Annäherung an die Einrückstellung der Kupplung sorgt für einen entsprechend weichen Einrückvorgang.

Dank der Erfindung wird daher mit einfachen Mitteln ein Schaltvorgang an der Kupplung erreicht, mit welchem der Schleifpunkt der Kupplung relativ schnell angefahren wird durch einen hohen Zufluss zur Kolben-Zylinder-Einheit, während zwischen dem Schleifpunkt und dem Reibschluss der Kupplung der Zufluss dann stetig abnimmt.

In diesem Bereich zwischen dem Schleifpunkt und dem Reibschluss findet der eigentliche Kupplungsvorgang statt, wobei dank der Erfindung durch die abnehmende Annäherungsgeschwindigkeit zwischen den am Reibschluss beteiligten Partnern der Kupplungsvorgang dann auch weich eingeleitet wird.

Ohne Beschränkung der Erfindung hierauf werden derartige Schaltungen hydraulisch oder pneumatisch betätigt.

Für solche Kupplungen, die für mechanische Pressen ausgelegt sind, werden hydraulische Ausgestaltungen bevorzugt.

Darin kann jedoch keine Beschränkung der Erfindung gesehen werden, weil diese letztlich sowohl für hydraulische als auch für pneumatische Druckmittelkreise verwendbar ist.

Zweckmäßigerweise wird das Wegeventil nach Erreichen der Einrückstellung geschlossen während die Einrückstellung dann nur noch vom Pressensicherheitsventil gehalten wird.

Daher sollte das Wegeventil an eine entsprechende Steuerung angeschlossen sein, über welches es ein- und ausschaltbar ist.

Ein geschlossenes Wegeventil unterbricht daher die Verbindung zwischen der Pumpe und der Kolben-Zylinder-Einheit.

Es ist lediglich noch eine Abstimmung erforderlich, um über das Wegeventil auch tatsächlich die Einrückposition der Kupplung zu erzielen, in welcher dann letzlich Reibschluss vorliegt.

Zu diesem Zweck wird vorgeschlagen, das Wegeventil separat vom Pressensicherheitsventil anzusteuern, so dass das Wegeventil mit Erreichen der Einrückstellung erst dann ausgeschaltet werden kann, wenn das Pressensicherheitsventil eingeschaltet ist und den Reibschluss der Kupplung aufrecht erhält.

Dabei kann das Pressensicherheitsventil auch erst nach Erreichen der Einrückstellung der Kupplung auf Durchlass schaltbar sein.

Wichtig ist, dass das Wegeventil dann abgeschaltet ist so dass es in seine Grundstellung zurückfahren kann um für den nächsten Kupplungsvorgang erneut zur Verfügung zu stehen.

Zu diesem Zweck wird vorgeschlagen, dass das Wegeventil im abgeschalteten zustand durch eine Feder in die Grundstellung zurückverlagerbar ist.

Diese mechanische Maßnahme ermöglicht es daher, ein elektrisch ansteuerbares Wegeventil vorzusehen, welches durch einfaches Abschalten des Stroms in die Grundstellung zurückverlagert wird.

Ein spezielles Ausführungsbeispiel der Erfindung ist Gegenstand der folgenden Figurenbeschreibung.

Dabei weist der Kolben des Wegeventils eine Ausnehmung auf, die während der Verlagerung des Kolbens mit zwei Steuerkanten des Ventilsgehäuses kämmt.

Die Längsausdehnung der Ausnehmung des Kolbens ist größer als der Längsabstand der beiden gehäuseseitigen Steuerkanten, so dass es einen Durchflusszustand gibt, in welcher das Druckmittel von der Pumpe zur Kolben-Zylinder-Einheit fließen kann, während gleichzeitig der Kolben des Wegeventils zunächst den der Kolben-Zylinder-Einheit zugewandten Durchlaßquerschnitt vergrößert, während gleichzeitig der pumpenseitige Durchlaßquerschnitt verringert wird.

Zweckmäßigerweise wird mit Erreichen einer Durchlassstellung der Kolben gegen einen verschiebbaren Anschlag laufen, der von einer weiteren Feder beaufschlagt ist und auf diese Weise bis zum Schließen des pumpenseitigen Querschnitts gegen die Kraft diese weiteren Feder verlagert.

Diese Maßnahme bietet den Vorteil, dass die weitere Feder in einem von Außen zugänglichen Federgehäuse untergebracht werden kann, um diese auf einfachem Wege an die baulichen Gegebenheiten anpassen zu können.

In einem Ausführungsbeispiel wird die Erfindung letztlich dann auch zur Verwendung in einer Kupplungs-Brems-Kombination gezeigt, bei welcher die Bremse als Sicherheitsbremse ausgelegt ist, die im Antriebsstrang einer mechanischen Presse sitzt.

Im Folgenden wird die Erfindung anhand von Ausführungsbeispielen näher erläutert.

Es zeigen:
- Fig.1: einen allgemeinen Schaltplan zur Anordnung der Erfindung im hydraulischen Schaltkreis einer Kupplungs-Brems-Kombination;
- Fig.2: Detailansicht des erfindungsgemäßen Wegeventils
Sofern im Folgenden nichts anderes gesagt ist, gilt die folgende Beschreibung stets für alle Figuren.

Die Figuren zeigen eine druckmittelbetätigte Schaltung 1 zur Verlagerung einer Kupplung 2 in die Einrückstellung 3 mittels einer Kolben-Zylinder-Einheit 4, die über ein Pressensicherheitsventil 5 zum Zwecke des Haltens der Kupplung 2 in der Einrückstellung 3 mit einer Druckleitung 6 kommunizierend verbindbar ist.

In dieser Einrückstellung 3 wird die Kupplung 2 also über das Pressensicherheitsventil 5 mit der Druckleitung 6 verbunden.

Der Reibschluss an der Kupplung 2 wird daher allein über den in der Druckleitung 6 anstehenden Druck erzielt.

Insoweit wird auf den Stand der Technik verwiesen.

Wesentlich ist nun, dass ein Wegeventil 7 vorgesehen ist, welches parallel zum Pressensicherheitsventil 5 die Kolben-Zylinder-Einheit 4 mit der Pumpe 8 in der Weise verbindet, dass der Zufluss von Druckmittel mit zunehmender Annäherung an die Einrückstellung 3 der Kupplung 2 abnimmt.

Dies bedeutet, dass die Kupplung 2 soweit in Richtung zur Einrückstellung 3 über das Wegeventil 7 verlagert wird, bis sich die am Reibschluss beteiligten Kupplungslamellen kurz vor oder sogar im Reibschluss befinden.

Während dieser Verlagerung von derjenigen Stellung, in welcher die Kupplung 2 nicht betätigt ist, bis zu derjenigen Stellung, in welcher der Reibschluss an der Kupplung 2 auftritt, wird daher das Druckmittel über das Wegeventil 7 der Kolben-Zylinder-Einheit 4 zugeführt.

Danach kann das Wegeventil 7 abgeschaltet werden.

Nach Erreichen der Einrücksstellung 3 wird dann die für den Reibschluss notwendige Kraft auf die Kupplungslamellen über das Pressensicherheitsventil 5 gewährleistet, welches dann die Druckleitung 6 mit der Kolben-Zylinder-Einheit 4 verbunden hält.

Das Wegeventil 7 ist dann in dieser Schaltstellung des Pressensicherheitsventils 5 nicht mehr erforderlich und kann folglich die Verbindung zwischen Pumpe 8 und Kolben-Zylinder-Einheit 4 geschlossen halten und/oder gleichzeitig in seine Grundstellung zurückgehen.

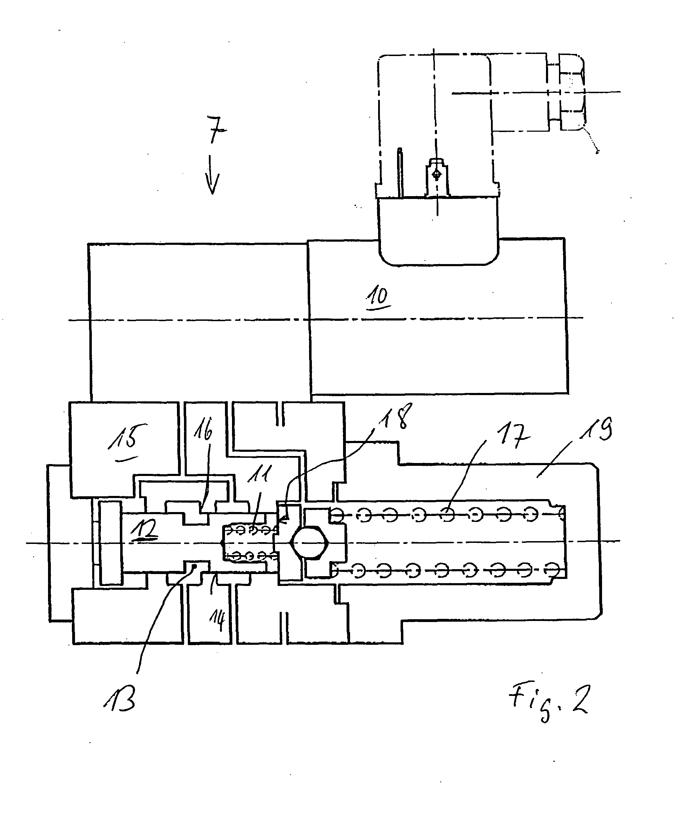

Zu diesem Zweck zeigt Fig.2 Details des Wegeventils 7.

Hier befindet sich das Wegeventil 7 in seiner Grundstellung.

In dieser Grundstellung ist das Wegeventil 7 stromlos.

Die Verbindung zwischen der Pumpe 8 und der Kolben-Zylinder-Einheit 4 ist unterbrochen.

Mit Ansteuerung des wegeventils 7 wird der Kolben 12 zunehmend nach rechts verlagert bis er letztlich in seiner ganz rechten Position steht.

Auch in dieser Position ist die Verbindung zwischen Pumpe 8 und Kolben-Zylinder-Einheit 4 unterbrochen.

Lediglich dazwischen ist eine kommunizierende Verbindung zwischen Pumpe 8 und Kolben-Zylinder-Einheit 4 ermöglicht.

Dieses Wegeventil 7 hat daher zwischen der Grundstellung, die in Fig.2 gezeigt ist und der am weitesten nach rechts verlagerten Stellung, in der es ebenfalls geschlossen ist, eine Öffnungskarakteristik mit zunehmender Drosselung.

Dabei sollte das Wegeventil 7 zumindest diejenige Menge an Druckmedium während der Verlagerung des Kolbens 12 an die Kolben-Zylinder-Einheit 4 übermitteln, die bis zur Erzielung des Reibschlusses an den Kupplungslamellen erforderlich ist.

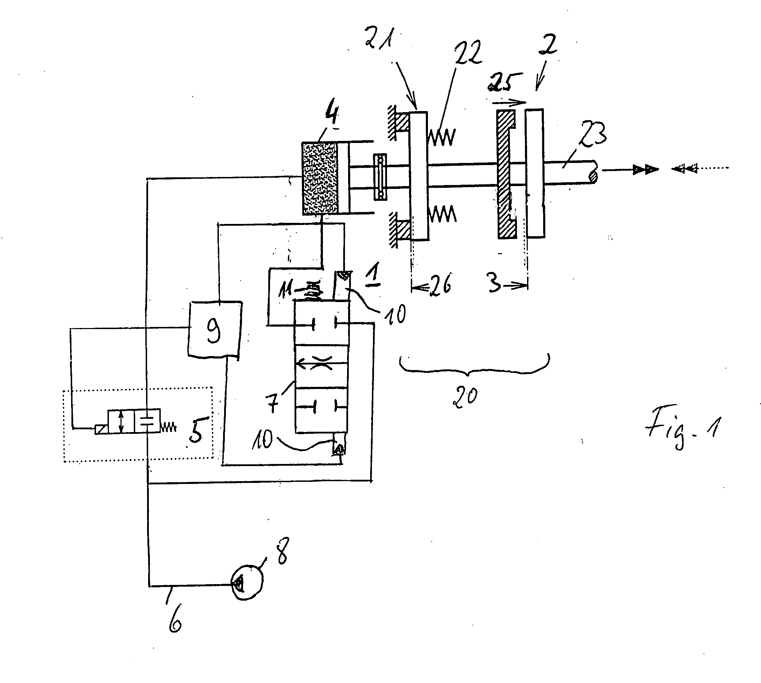

Wie insbesondere Fig.1 zeigt, ist das Wegeventil 7 zu diesem Zweck unabhängig von dem Pressensicherheitsventil 5 ansteuerbar.

Es ist eine Steuerung 9 vorgesehen, welche das Wegeventil 7 und das Pressensicherheitsventil 5 entsprechend steuert.

Mittels dieser Steuerung 9 werden also Pressensicherheitsventil 5 und Wegeventil 7 so gesteuert, daß das Wegeventil 7 die Kupplung in die Einrückstellung 3 verlagert und anschließend das Pressensicherheitsventil die Kupplung in der Einrückstellung im Reibschluss hält.

Wie insbesondere Fig.2 zeigt, kann zu diesem Zweck das Wegeventil 7 über eine elektrische Ansteuerung verfügen.

Hat die Kupplung 2 ihre Einrückstellung 3 erreicht, sollte das Wegeventil 7 abgeschaltet werden.

Dies wird durch die Steuerung 9 herbeigeführt.

Anschließend kann das Wegeventil 7 im abgeschalteten Zustand durch Federkraft in die in Fig.2 gezeigte Grundstellung zurückgeführt werden.

Das Wegeventil 7 weist zu diesem Zweck einen gegen die Kraft einer Feder 11 verlagerbaren Kolben 12 auf, der eine Steuerausnehmung 13 aufweist, die mit einem umlaufenden Gehäusebund des Ventilgehäuses 15 kämmt.

Dabei überfährt die Steuerausnehmung 13 bei Verlagerung des Kolbens 12 zur Erzielung der Einrückstellung 3 der Kupplung 2 eine erste Gehäusekante 14, so dass eine Öffnung des Durchlasses zwischen Pumpe 8 und Kolben-Zylinder-Einheit 4 erfolgt.

Erst bei weiterer Verlagerung des Kolbens 12 in derselben Richtung erfolgt über eine zweite Gehäusekante 16 ein Schließen des Durchlasses zwischen Pumpe 8 und Kolben-Zylinder-Einheit 4.

Dies wird dadurch erreicht, dass die Steuerausnehmung 13 mit ihrer anderen Endkante über die zweite Gehäusekante 16 fährt und auf diese weise den Durchlass schließt.

Man kann nachvollziehen, dass ein derartiges Wegeventil 7 eine Zu-Auf-Zu Schaltkarakteristik besitzt, wobei die ZuStellung des Wegeventils 7 sowohl in der in Fig.2 gezeigten Grundstellung als auch in derjenigen Stellung des Kolbens 12 zu sehen ist, in welcher dieser ganz nach rechts verlagert ist.

Die beiden Gehäusekanten 14 und 16 dienen daher in Zusammenarbeit mit der Steuerausnehmung 13 am Kolben 12 dieser Schaltkarakteristik.

In einer Mittelstellung des Kolbens 12, in welcher eine durchlässige Verbindung zwischen Pumpe 8 und Kolben-Zylinder-Einheit 4 vorliegt, trifft der Kolben 2 auf einen durch eine zweite Feder 17 beaufschlagten verschiebbaren Anschlag 18, und verlagert diesen Anschlag 18 mit zunehmender Verschiebung nach rechts gegen die wachsende Kraft der zweiten Feder 17.

Dabei nähert sich die linke Kante der Steuerausnehmung 13 zusehens der zweiten Gehäusekante 16 an, so dass der Durchlassquerschnitt zwichen Pumpe 8 und Kolben-Zylinder-Einheit 4 zusehens verringert wird bis er dann letztlich geschlossen ist.

Die zweite Feder 2 sitzt in einem Federgehäuse 19, welches von Außen zugänglich ist.

Das Federgehäuse 19 nimmt die zweite Feder 17 auf.

Die zweite Feder 17 kann auswechselbar vorgesehen sein um dass Wegeventil 7 an bauliche Gegebenheiten der Kupplung anpassen zu können.

Ergänzend hierzu zeigt Fig.1 die hydraulische Schaltung 1 zur Betätigung der Kupplung 2 einer Kupplungs-Brems-Kombination 20 mit Sicherheitsbremse.

Die Kupplungs-Brems-Kombination 20 bildet ein System aus Kupplung 2 und Bremse 21 mit getrennter Kupplung 2 und Bremse 21 im Hauptantrieb 23 einer mechanischen Presse, wobei Kupplung 2 und Bremse 21 durch die Kolben-Zylinder-Einheit 4 zwischen der Einrückstellung 3 der Kupplung und der Bremsstellung 26 verfahrbar sind.

Die Kolben-Zylinder-Einheit 4 wird über das Pressensicherheitsventil 5 zum Halten des Reibschlusses an der Kupplung 2 mit der Druckleitung 6 kommunizierend verbunden, während die Bremse 21 gegen die Einrückrichtung 25 der Kupplung 2 mittels der Bremsfedern 22 federbelastet ist.

### Bezugszeichenliste

- 1: Schaltung
- 2: Kupplung
- 3: Einrückstellung
- 4: Kolben-zylinder-Einheit
- 5: Pressensicherheitsventil
- 6: Druckleitung
- 7: Wegeventil
- 8: Pumpe
- 9: Steuerung
- 10: elektrische Ansteuerung
- 11: erste Feder
- 12: verlagerbarer Kolben
- 13: Steuerausnehmung
- 14: erste Gehäusekante
- 15: Ventilgehäuse
- 16: zweite Gehäusekante
- 17: zweite Feder
- 18: Anschlag
- 19: Federgehäuse
- 20: Kupplungs-Brems-Kombination
- 21: Bremse
- 22: Bremsfeder
- 23: Hauptantrieb
- 25: Einrückrichtung
- 26: Bremsstellung

## Patentansprüche

1. Druckmittelbetätigte Schaltung (1) zur Verlagerung einer Kupplung (2) in die Einrückstellung (3) mittels einer Kolben-Zylinder-Einheit (4), die über ein Pressensicherheitsventil (5) zwecks Halten der Kupplung (2) in der Einrückstellung (3) mit der Druckleitung (6) kommunizierend verbindbar ist, **dadurch gekennzeichnet, dass** ein Wegeventil (7) vorgesehen ist, welches parallel zum Pressensicherheitsventil (5) die Kolben-Zylinder-Einheit (4) mit der Pumpe (8) in der Weise verbindet, dass der Zufluss von Druckmittel mit zunehmender Annäherung an die Einrückstellung (3) der Kupplung (2) abnimmt.

2. Druckmittelbetätigte Schaltung (1) nach Anspruch 1, **dadurch gekennzeichnet, dass** das wegeventil (7) nach Erreichen der Einrückstellung (3) geschlossen ist und die Einrückstellung (3) vom Pressensicherheitsventil (5) gehalten wird.

3. Druckmittelbetätigte Schaltung (1) nach Anspruch 1 oder 2, **dadurch gekennzeichnet, dass** das Wegeventil (7) bei ausgerückter Kupplung (2) einen geschlossenen Durchlass aufweist.

4. Druckmittelbetätigte Schaltung (1) nach einem der Ansprüche 1 bis 3, **dadurch gekennzeichnet, dass** das Wegeventil (7) derart ansteuerbar ist, dass es diejenige Menge an Druckmittel zur Kolben-Zylinder-Einheit (4) übermittelt, die bis zum Reibschluss der Kupplung (2) notwendig ist.

5. Druckmittelbetätigte Schaltung (1) nach einem der Ansprüche 1 bis 4, **dadurch gekennzeichnet, dass** das Wegeventil (7) separat vom Pressensicherheitsventil (5) ansteuerbar ist und dass eine Steuerung (9) zur Ansteuerung des Pressensicherheitsventils (5) vorgesehen ist, mittels welcher das Pressensicherheitsventil (5) erst im Bereich der Einrückstellung (3) der Kupplung auf Durchlass schaltbar ist.

6. Druckmittelbetätigte Schaltung (1) nach Anspruch 5, **dadurch gekennzeichnet, dass** das Pressensicherheitsventil (5) erst nach Erreichen der Einrückstellung (3) der Kupplung auf Durchlass schaltbar ist.

7. Druckmittelbetätigte Schaltung (1) nach einem der Ansprüche 1 bis 6, **dadurch gekennzeichnet, dass** das Wegeventil (7) abschaltbar ist, wenn die Kupplung (2) ihre Einrückstellung (25) erreicht hat.

8. Druckmittelbetätigte Schaltung (1) nach Anspruch 7, **dadurch gekennzeichnet, dass** das Wegeventil (7) im abgeschalteten Zustand durch Federkraft (11,17) in Grundstellung verlagerbar ist.

9. Druckmittelbetätigte Schaltung (1) nach Anspruch 7 oder 8, **dadurch gekennzeichnet, dass** das Wegeventil (7) über eine elektrische Ansteuerung (10) ansteuerbar ist.

10. Druckmittelbetätigte Schaltung (1) nach einem der Ansprüche 1 bis 9, **dadurch gekennzeichnet, dass** das Wegeventil (7) einen gegen die Kraft einer Feder (11) verlagerbaren Kolben (12) aufweist, der eine Steuerausnehmung (13) besitzt, welche bei Verlagerung des Kolbens (12) zur Erzielung der Einrückstellung (3) der Kupplung (2) eine erste Gehäusekante (14) des Ventilgehäuses (15) zum Öffnen des Durchlasses zwischen Pumpe (8) und Rolben-Zylinder-Einheit (4) und bei weiterer Verlagerung des Kolbens (12) eine zweite Gehäusekante (16) des Ventilgehäuses (15) zum Schließen des Durchlasses zwischen Pumpe (8) und Kolben-Zylinder-Einheit (4) aufweist, wobei die erste Gehäusekante (14) der Kolben-Zylinder-Einheit (4) und die zweite Gehäusekante (16) dem Anschluß der Pumpe (8) zugewandt ist.

11. Druckmittelbetätigte Schaltung (1) nach Anspruch 10, **dadurch gekennzeichnet, dass** der Kolben (12) mit Erreichen einer Durchlassstellung gegen einen durch eine zweite Feder (17) beaufschlagten verschiebbaren Anschlag (18) trifft und mit zunehmender Verlagerung der wachsenden Federkraft durch die zweite Feder (17) unterliegt.

12. Druckmittelbetätigte Schaltung (1) nach Anspruch 11, **dadurch gekennzeichnet, dass** die zweite Feder (17) in einem von außen zugänglichen Federgehäuse (19) auswechselbar sitzt.

13. Druckmittelbetätigte Schaltung (1) nach einem der Ansprüche 1 bis 12, **dadurch gekennzeichnet, dass** die Schaltung (1) zur Betätigung der Kupplung (2) einer Kupplungs-Brems-Kombination (20) mit Sicherheitsbremse (21) ausgelegt ist, wobei die Kupplungs-Krems-Kombination (20) ein System aus Kupplung (2) und Bremse (21) mit getrennter Kupplung (2) und Bremse (21) im Hauptantrieb (23) einer mechanischen Presse darstellt, wobei Kupplung (2) und Bremse (21) durch die Kolben-Zylinder-Einheit (4) zwischen der Einrückstellung (3) der Kupplung und der Bremsstellung (26) verfahrbar sind und wobei die Kolben-Zylinder-Einheit (4) über das Pressensicherheitsventil (5) zum Drehmomentaufbau an der Kupplung (2) mit der Druckleitung (6) kommunizierend verbindbar und wobei die Bremse (21) gegen die Einrückrichtung (25) der Kupplung (2) durch Bremsfedern (22) federbelastet ist.
